# EUROPÄISCHE PATENTSCHRIFT

(11) **EP 2 046 469 B1**
(45) Veröffentlichungstag und Bekanntmachung des Hinweises auf die Patenterteilung: **30.04.2014**
(21) Anmeldenummer: 07764978.8
(22) Anmeldetag: 30.06.2007
(51) Int. Cl.: B01D 17/02, B01D 21/24

(54) **DEKANTER MIT SCHWENKBAREM ABFÜHRROHR**
DECANTER HAVING A PIVOTING DISCHARGE PIPE
DÉCANTEUR DOTÉ D'UN TUBE D'ÉVACUATION PIVOTANT

(30) Priorität: 04.08.2006 DE 102006036591
(43) Veröffentlichungstag der Anmeldung: 15.04.2009
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Gassner, Wolfgang
(86) Internationale Anmeldenummer: PCT/EP2007/005818
(87) Internationale Veröffentlichungsnummer: WO 2008/014856

(56) Entgegenhaltungen:
- EP-A- 0 979 668
- DE-A1- 19 636 153
- DE-U1- 29 514 481
- US-A- 5 358 644

## Beschreibung

Die Erfindung betrifft einen Dekanter nach dem Oberbegriff des Anspruchs 1.

Ein solcher Dekanter ist aus dem Prospekt "USFilter" der Firma United States Filter Corporation, Edwardsville, KS 66111 aus dem Jahr 2004 bekannt. Dabei ist das Abführrohr axial über einen flexiblen Schlauch mit einem Anschlussstutzen verbunden. Zur Stabilisierung der durch den Schlauch gebildeten gelenkigen Verbindung sind beiderseits des Schlauchs Kniegelenke vorgesehen, welche fest mit dem Anschlussstutzen und dem Abführrohr verbunden sind. Die Kniegelenke sind insbesondere bei Einwirkung von Torsionskräften nicht besonders stabil. Abgesehen davon erfordert die aus Kniegelenken und Schlauchverbindung geschaffene schwenkbare Verbindung zwischen dem Anschlussstutzen und dem Abführrohr einen relativ hohen Platzbedarf.

Ebenso beschreibt US-A-5 358 644 einen Dekanter.

Aufgabe der Erfindung ist es, die Nachteile nach dem Stand der Technik zu beseitigen. Es soll insbesondere ein Dekanter angegeben werden, dessen Schwenkverbindung eine verbesserte Stabilität und Robustheit aufweist.

Diese Aufgabe wird durch die Merkmale des Anspruchs 1 gelöst. Zweckmäßige Ausgestaltungen der Erfindung ergeben sich aus den Merkmalen der Ansprüche 2 bis 15.

Nach Maßgabe der Erfindung ist vorgesehen, dass das Abführrohr an seinem zweiten Ende schwenkbar um eine Schwenkachse in einem, zwei gegen eine Unterlage abgestützte Lagerböcke aufweisenden Schwenklager aufgenommen ist. - In Abkehr vom Stand der Technik verläuft bei der erfindungsgemäß vorgeschlagenen Konstruktion die Schwenkachse nicht mehr durch den Schlauch, d. h. der Schlauch ist nicht mehr Bestandteil der Schwenkeinrichtung. Erfindungsgemäß werden die Funktion des "Verschwenkens" des Abführrohrs und die Funktion des "Ausgleichens von durch Schwenkbewegungen des Abführrohrs bedingten Formänderungen des Schlauchs" voneinander getrennt. Unter dem Begriff "Abführrohr" wird in diesem Zusammenhang insbesondere auch ein Endabschnitt des Abführrohrs oder ein am Endabschnitt des Abführrohrs endständig radial angesetztes Rohr verstanden. - Die erfindungsgemäße Konstruktion ist besonders robust und stabil. Sie kann relativ kostengünstig hergestellt werden.

Nach einer vorteilhaften Ausgestaltung umfasst die Abzieheinrichtung ein senkrecht zum Abführrohr verlaufendes Abziehrohr mit einem in axialer Richtung verlaufenden Ansaugschlitz. Das Abziehrohr ist zweckmäßigerweise mittig am Abführrohr angebracht. Gegenüberliegend dem Ansaugschlitz kann mit einem vorgegebenen Abstand, welcher 2 bis 15 cm betragen kann, ein V-förmiges Blech angebracht sein. Durch die vorgeschlagene Schlitzbreite zwischen dem Blech und dem Abziehrohr wird ein Eintrag größerer Schmutzpartikel verhindert.

Nach einer weiteren Ausgestaltung ist in der Nähe des ersten Endes ein erster Flansch zum lösbaren Anbringen der Abzieheinrichtung vorgesehen. Das erleichtert eine Reparatur oder einen Austausch der Abzieheinrichtung.

Des Weiteren kann in der Nähe des zweiten Endes des Abführrohrs ein zweiter Flansch zur lösbaren Verbindung mit einem im Schwenklager gehaltenen Endabschnitt des Abführrohrs vorgesehen sein. Insbesondere durch das Vorsehen des ersten und des zweiten Flanschs ist es möglich, die Länge des Abführrohrs den jeweiligen Anforderungen anzupassen. Dabei kann die konstruktive Ausgestaltung des im Schwenklager aufgenommenen Endabschnitts des Abführrohrs sowie der Abzieheinrichtung unverändert bleiben.

Nach einer weiteren, besonders vorteilhaften Ausgestaltung ist der flexible Schlauch an einem im Wesentlichen radial vom Endabschnitt sich erstreckenden weiteren Anschlussstutzen angeschlossen. Der weitere Anschlussstutzen ist zweckmäßigerweise mit seiner Achse im Wesentlichen senkrecht zur Schwenkachse am Endabschnitt angebracht. In einer besonders einfachen konstruktiven Ausgestaltung handelt es sich bei dem Endabschnitt also um ein T-Rohrstück, an dessen einem Ende der zweite Flansch vorgesehen ist und dessen anderes Ende radial an ein Rohr angesetzt ist, welches schwenkbar um die Schwenkachse in den Lagerböcken gehalten ist. Dabei kann in jedem der Lagerböcke lösbar ein sich in das zwischen den Lagerbökken aufgenommene Rohr erstreckender Zapfen drehbar vorgesehen sein. Der Zapfen kann insbesondere in einem im Rohr gehaltenen Gleitlager aufgenommen sein.

Das Schwenklager kann selbstverständlich auch anders ausgestaltet sein: Beispielsweise können die Lagerböcke Durchbrüche mit einem Durchmesser aufweisen, welcher geringfügig größer als ein Außendurchmesser des Rohrs ist. Durch die Durchbrüche kann das Rohr hindurchgeführt sein, so dass es beiderseits über die Lagerböcke hervorsteht. Anstelle der Lagerbökke kann das Rohr auch schwenkbar in einer Rohrhalterung, insbesondere in einer Doppelschellenrohrhalterung, aufgenommen sein.

Nach einer weiteren Ausgestaltung der Erfindung ist eine Schwenkvorrichtung zum Verschwenken des Abführrohrs um die Schwenkachse vorgesehen. Die Schwenkvorrichtung kann eine elektrische Seilwinde umfassen, dessen darauf aufgenommenes Seil über eine Führungsrolle geführt und in der Nähe des ersten Endes des Abführrohrs befestigt ist. Die Schwenkvorrichtung kann eine gegen die Unterlage über zumindest eine Stütze abgestützte Plattform umfassen, auf welcher die Seilwinde aufgenommen ist. Die vorgeschlagene Schwenkvorrichtung kann insbesondere nach Art eines "Krans" ausgebildet sein, mit welchem das Abführrohr verschwenkt werden kann. In einer im Wesentlichen vertikalen Position des Abführrohrs ist zweckmäßigerweise insbesondere die Abzieheinrichtung über die Plattform zugänglich. Das erleichtert Reinigungs-, Wartungs- oder Reparaturmaßnahmen.

Nach einer weiteren Ausgestaltung ist die Schwenkvorrichtung auf der Unterlage befestigt. Bei der Unterlage kann es sich um den Boden und/oder die Wand des Klärbeckens handeln.

Nach einer besonders vorteilhaften alternativen Ausgestaltung der Erfindung ist die Unterlage ein aus Metall hergestellter Rahmen. Das ermöglicht es, den Dekanter als montagefertige Einheit herzustellen. Eine solche montagefertige Einheit kann den Rahmen mit daran angebrachtem Schwehklager und daran angebrachtem Anschlussstutzen umfassen. Dabei kann die Schlauchverbindung zwischen dem Endabschnitt des Abführrohrs und dem Anschlussstutzen vormontiert sein. Ferner kann die montagefertige Einheit zusätzlich die Schwenkvorrichtung umfassen. Eine derartige montagefertige Einheit kann besonders einfach in Betrieb genommen werden. Sie muss dazu lediglich in ein Klärbecken eingesetzt, nachfolgend auf dem Boden des Klärbeckens fixiert und der Anschlussstutzen mit einem an der Wand des Klärbeckens vorgesehenen Abführstutzen verbunden werden.

Nach einer alternativen Ausgestaltung der Erfindung kann der Rahmen auch mit Schwimmkörpern versehen sein. In diesem Fall ist der Dekanter nach Art eines Floßes ausgebildet und kann schwimmend im Klärbecken betrieben werden.

Nachfolgend werden Ausführungsbeispiele der Erfindung anhand der Zeichnungen näher erläutert. Es zeigen:
- Fig. 1: eine perspektivische Ansicht eines Dekanters,
- Fig. 2: eine schematische Schnittansicht durch den Dekanter gemäß Fig. 1,
- Fig. 3: eine perspektivische Ansicht eines Schwenklagers, und
- Fig. 4: eine schematische Schnittansicht durch das Schwenklager gemäß Fig. 3.

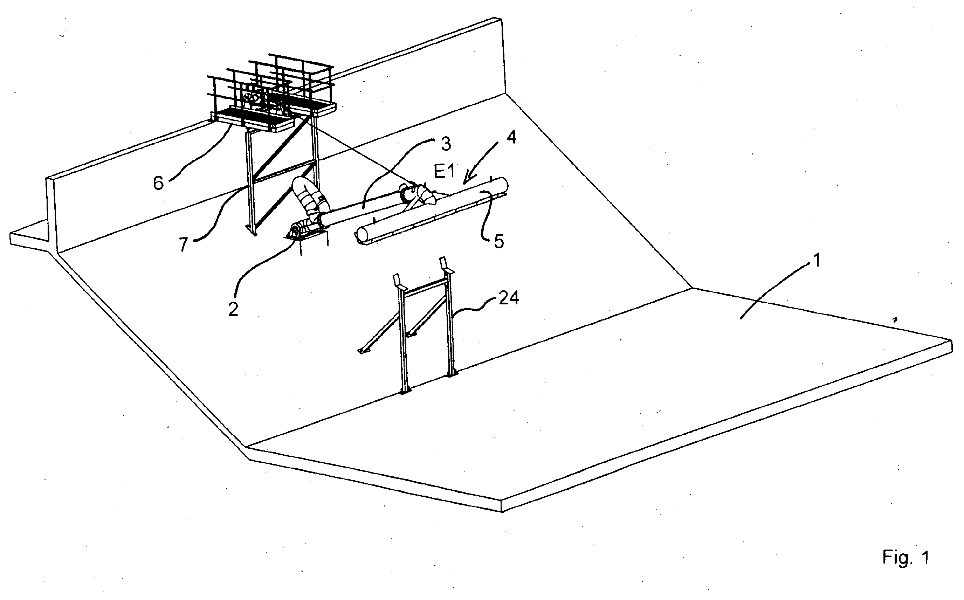

Fig. 1 zeigt in perspektivischer Ansicht einen Ausschnitt eines Klärbeckens 1, dessen Boden und Wände beispielsweise aus Beton hergestellt sind. Im Klärbecken 1 ist ein Dekanter angebracht. Der Dekanter umfasst ein allgemein mit dem Bezugszeichen 2 bezeichnetes Schwenklager, welches am Klärbecken 1 befestigt ist. Im Schwenklager 2 ist schwenkbar ein Abführrohr 3 gehalten, an dessen erstem Ende E1 eine allgemein mit dem Bezugszeichen 4 bezeichnete Abzieheinrichtung angebracht ist. Die Abzieheinrichtung 4 umfasst ein Abziehrohr 5, welches sich im Wesentlichen senkrecht zur Achse des Abführrohrs 3 erstreckt. Eine Plattform 6 ist über Stützen 7 im Klärbekken 1 abgestützt.

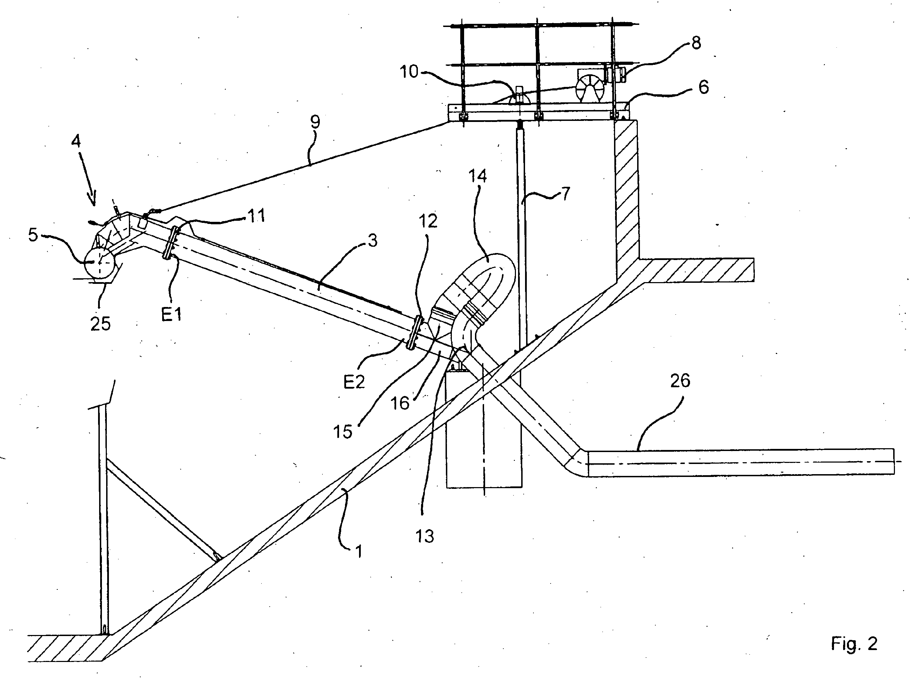

Wie insbesondere in Zusammensicht mit Fig. 2 ersichtlich ist, ist auf der Plattform 6 eine Seilwinde 8 montiert. Ein auf der Seilwinde 8 aufgenommenes Seil 9 ist über eine ebenfalls an der Plattform 6 angebrachte Führungsrolle 10 in der Nähe des ersten Endes an der Abzieheinrichtung 4 befestigt.

Zur Verbindung des Abführrohrs 3 mit der Abzieheinrichtung 4 ist am ersten Ende E1 ein erster Flansch 11 vorgesehen. Das Abführrohr 3 weist an seinem dem ersten Ende E1 gegenüberliegenden zweiten Ende E2 einen zweiten Flansch 12 zur Verbindung mit dem Schwenklager 2 auf. In Fig. 2 ist mit dem Bezugszeichen 13 ein fest mit dem Klärbecken 1 verbundener Anschlussstutzen bezeichnet. Der Anschlussstutzen 13 ist über einen flexiblen Schlauch 14 mit einem weiteren Anschlussstutzen 15 verbunden, welcher sich radial von einem Endabschnitt 16 des Abführrohrs 3 erstreckt.

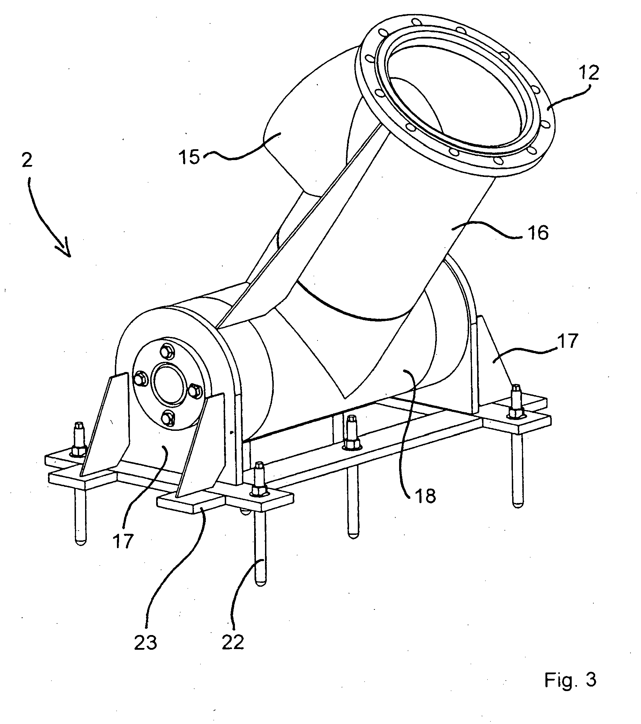

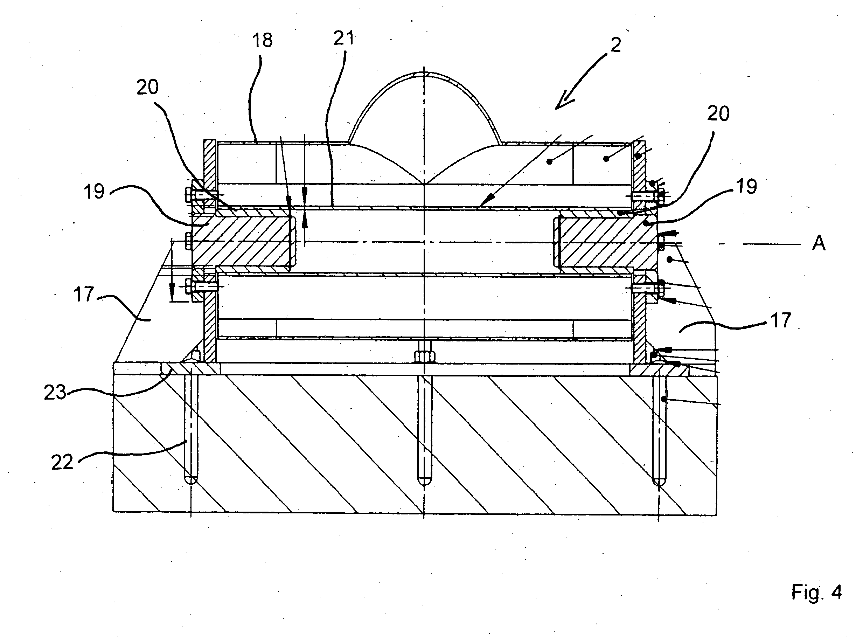

Die Fig. 3 und 4 zeigen im Detail das Schwenklager 2. Zwischen zwei Lagerböcken 17 ist drehbar ein Rohr 18 aufgenommen. Vom Rohr 18 erstreckt sich in im Wesentlichen radialer Richtung der Endabschnitt 16 des Abführrohrs 3. Der weitere Anschlussstutzen 15 erstreckt sich in im Wesentlichen radialler Richtung vom Endabschnitt 16. Eine Achse des weiteren Anschlussstutzens 15 verläuft also im Wesentlichen senkrecht zu der in Fig. 4 gezeigten Schwenkachse A des Schwenklagers 2.

An den Lagerböcken 17 sind lösbar zum Inneren des Rohrs 18 hinweisende Zapfen 19 angebracht, welche in Gleitlagern 20 aufgenommen sind. Die Gleitlager 20 sind in einem im Rohr 18 befestigten inneren Rohr 21 gehalten. Bolzen 22 durchgreifen einen Lagerbockrahmen 23, auf welchem die Lagerböcke 17 aufgenommen sind.

Die Funktion des Dekanters ist folgende:
In einer Ruheposition kann das Abführrohr 3 auf eine im Klärbecken 1 abgestützten Stützvorrichtung 24 abgelegt werden. Zum Dekantieren eines Überstands wird die Abzieheinrichtung 4 mittels der Seilwinde 8 soweit angehoben, dass ein hier nicht näher gezeigter Ansaugschlitz, welcher sich hinter einem V-förmigen Blech 25 des Abziehrohrs 5 befindet, sich knapp unterhalb der Obefläche eines Überstands befindet. Anschließend kann, beispielsweise durch die Wirkung einer Pumpe, der Überstand durch den Ansaugschlitz in das Abziehrohr 5 angesaugt und durch das Abführrohr 3 über den flexiblen Schlauch 14 zum Anschlussstutzen 13 und von da aus durch eine vom Anschlussstutzen 13 wegführende Leitung 25 abgeführt werden.

Wie insbesondere aus Fig. 2 ersichtlich ist, ist der Schlauch 14 nicht Bestandteil des Schwenklagers 2. Insbesondere nimmt der Schlauch 14 nicht die Gewichtskraft des daran angebrachten Abführrohrs 3 mit Abzieheinrichtung 4 auf. Die Gewichtskraft des Abführrohrs 3 mit daran angebrachter Abzieheinrichtung 4 wird erfindungsgemäß durch das Schwenklager 2 aufgenommen. Indem der weitere Abführstutzen 15 in einer im Wesentlichen senkrechten Richtung sich vom Endabschnitt 16 erstreckt, kann im Schlauch 14 eine Umbiegung realisiert werden, wodurch ohne weiteres die Schwenkbewegungen des Abführrohrs 3 aufgenommen werden können.

Im vorliegenden Ausführungsbeispiel sind das Schwenklager 2, die Stützen 7, die Plattform 6 sowie der Anschlussstutzen 13 am Klärbecken 1 montiert. Nach einer weiteren - hier nicht gezeigten - Ausgestaltungsform der Erfindung ist es auch möglich, einen insbesondere aus Metall hergestellten gemeinsamen Rahmen vorzusehen, auf welchem sowohl das Schwenklager 2 als auch der Anschlussstutzen 13 montiert sind. Ferner können zusätzlich auf dem Rahmen auf die Plattform 6 sowie die Stützen 7 montiert sein. Es kann damit ein Dekanter als montagefertige Einheit bereitgestellt werden, welche zur Montage insgesamt in ein Klärbecken 1 eingesetzt werden kann.

Nach einer weiteren - nicht gezeigten - Ausgestaltungsform der Erfindung ist es gleichfalls möglich, das Schwenklager 2 sowie den Abführstutzen 13 an einem gemeinsamen Rahmen zu montieren. Der Rahmen kann mit Schwimmkörpern versehen sein, so dass der Dekanter insgesamt schwimmfähig nach Art eines Floßes im Klärbecken 1 schwimmend aufgenommen sein kann. Auch in diesem Fall ist auf dem Floss eine Seilwinde 8 vorgesehen, mit welcher die Abzieheinrichtung 4 verschwenkbar ist.

### Bezugszeichenliste

- 1: Klärbecken
- 2: Schwenklager
- 3: Abführrohr
- 4: Abzieheinrichtung
- 5: Abziehrohr
- 6: Plattform
- 7: Stütze
- 8: Seilwinde
- 9: Seil
- 10: Führungsrolle
- 11: erster Flansch
- 12: zweiter Flansch
- 13: Anschlussstutzen
- 14: Schlauch
- 15: weiterer Anschlussstutzen
- 16: Endabschnitt
- 17: Lagerbock
- 18: Rohr
- 19: Zapfen
- 20: Gleitlager
- 21: inneres Rohr
- 22: Bolzen
- 23: Lagerbockrahmen
- 24: Stützvorrichtung
- 25: Leitung

- A: Schwenkachse
- E1: erstes Ende
- E2: zweites Ende

## Patentansprüche

1. Dekanter zum Abtrennen eines über einem Klärschlamm stehenden Überstands in einem Klärbecken (1), mit einer an einem ersten Ende (E1) eines schwenkbar gehaltenen Abführrohrs (3) angebrachten Abzieheinrichtung (4), wobei zum Abführen des durch das Abführrohr (3) strömenden Überstands in der Nähe eines der Abzieheinrichtung (4) gegenüberliegenden zweiten Endes (E2) ein flexibler Schlauch (14) vorgesehen ist, welcher mit einem relativ zum Schwenklager (2) fest an der Unterlage montierten Anschlussstutzen (13) verbunden ist,
**dadurch gekennzeichnet, dass**
das Abführrohr (3) an seinem zweiten Ende (E2) schwenkbar um eine Schwenkachse (A) in einem, zwei gegen die Unterlage abgestützte Lagerböcke (17) aufweisenden Schwenklager (2) aufgenommen ist.

2. Dekanter nach Anspruch 1, wobei die Abzieheinrichtung (4) ein senkrecht zum Abführrohr (3) verlaufendes Abziehrohr (5) mit einem in axialer Richtung verlaufenden Ansaugschlitz umfasst.

3. Dekanter nach einem der vorhergehenden Ansprüche, wobei in der Nähe des ersten Endes (E1) ein erster Flansch (11) zum lösbaren Anbringen der Abzieheinrichtung (4) vorgesehen ist.

4. Dekanter nach Anspruch 3, wobei in der Nähe des zweiten Endes (E2) des Abführrohrs (3) ein zweiter Flansch (12) zur lösbaren Verbindung mit einem im Schwenklager (2) gehaltenen Endabschnitt (16) des Abführrohrs (3) vorgesehen ist.

5. Dekanter nach Anspruch 4, wobei der flexible Schlauch (14) an einem im Wesentlichen radial vom Endabschnitt (16) sich erstreckenden weiteren Anschlussstutzen (15) angeschlossen ist.

6. Dekanter nach Anspruch 4 oder 5, wobei der weitere Anschlussstutzen (15) mit seiner Achse im Wesentlichen senkrecht zur Schwenkachse (A) am Endabschnitt (16) angebracht ist.

7. Dekanter nach einem der vorhergehenden Ansprüche, wobei an jedem der Lagerböcke (17) lösbar ein sich in ein zwischen den Lagerböcken (17) aufgenommenes Rohr (18) erstreckender Zapfen (19) vorgesehen ist.

8. Dekanter nach Anspruch 7, wobei der Zapfen (19) in einem im Rohr (18) gehaltenen Gleitlager (20) aufgenommen ist.

9. Dekanter nach einem der vorhergehenden Ansprüche, wobei eine Schwenkvorrichtung zum Verschwenken des Abführrohrs (3) um die Schwenkachse (A) vorgesehen ist.

10. Dekanter nach Anspruch 9, wobei die Schwenkvorrichtung eine elektrische Seilwinde (8) umfasst, dessen darauf aufgenommenes Seil (9) über eine Führungsrolle (10) geführt und in der Nähe des ersten Endes (E1) des Abführrohrs (3) befestigt ist.

11. Dekanter nach Anspruch 9 oder 10, wobei die Schwenkvorrichtung eine gegen die Unterlage über zumindest eine Stütze (7) abgestützte Plattform (6) umfasst, auf welcher die Seilwinde (8) aufgenommen ist.

12. Dekanter nach Anspruch 9, 10, oder 11, wobei die Schwenkvorrichtung auf der Unterlage befestigt ist.

13. Dekanter nach einem der vorhergehenden Ansprüche, wobei die Unterlage der Boden und/oder die Wand des Klärbeckens (1) ist.

14. Dekanter nach einem der vorhergehenden Ansprüche, wobei die Unterlage ein aus Metall hergestellter Rahmen ist.

15. Dekanter nach Anspruch 14, wobei der Rahmen mit Schwimmkörpern versehen ist.

## Claims

1. Decanter for separating a supernate of sewage sludge in a clarifier (1) with a withdrawal device (4) attached to a first end (E1) of a swivelably held discharge pipe (3), wherein a flexible hose (14) is provided in the vicinity of a second end (E2) located opposite the withdrawal device (4) to conduct off the supernate flowing through the discharge pipe (3), which hose is connected with a connection piece (13) which is relative to the swivel bearing (2), permanently mounted on the base
**characterized in that**
the second end (E2) of the discharge pipe (3) is mounted swivelably around a swivel axis (A) in a swivel bearing (2) having two bearing blocks (17) supported against the base.

2. Decanter as defined in claim 1, wherein the withdrawal device (4) comprises a withdrawal pipe (5) running vertically to the discharge pipe (3) with a suction slit running in the axial direction.

3. Decanter as defined in one of the preceding claims, wherein in the vicinity of the first end (E1) a first flange (11) is provided for the detachable attachment of the withdrawal device (4).

4. Decanter as defined in claim 3, wherein in the vicinity of the second end (E2) of the discharge pipe (3) a second flange (12) is provided for the detachable connection to an end section (16) of the discharge pipe held in the swivel bearing (2).

5. Decanter as defined in claim 4, wherein the flexible hose (14) is connected to a further connection piece (15) extending essentially radially from the end section (16).

6. Decanter as defined in claim 4 or 5, wherein the further connection piece (15) with its axis essentially vertical to the swivel axis (A) is attached to the end section (16).

7. Decanter as defined in one of the preceding claims, wherein a pin (19) extending in a pipe (18) mounted between the bearing blocks (17) is detachably provided on each of the bearing blocks (17).

8. Decanter as defined in claim 7, wherein the pin (19) is mounted in a floating bearing (20) held in a pipe (18).

9. Decanter as defined in one of the preceding claims, wherein a swivel device is provided for swiveling the discharge pipe (3) around the swivel axis (A).

10. Decanter as defined in claim 9, wherein the swivel device comprises an electric cable winch (8) whose cable (9) is conducted over a guide roll (10) and is secured in the vicinity of the first end (E1) of the discharge pipe (3).

11. Decanter as defined in claim 9 or 10, wherein the swivel device comprises a platform (6) supported via at least one support (7) against the base on which platform the cable winch (8) is contained.

12. Decanter as defined in claim 9, 10 or 11, wherein the swivel device is secured to the base.

13. Decanter as defined in one of the preceding claims, wherein the base is the bottom and/or the wall of the clarifier (1).

14. Decanter as defined in one of the preceding claims, wherein the base is a frame made of metal.

15. Decanter as defined in claim 14, wherein the frame is provided with floating bodies.

## Revendications

1. Décanteur destiné à séparer un surnageant se trouvant au-dessus de boues d'épuration dans un bassin de décantation (1), comportant un dispositif de soutirage (4) monté sur une première extrémité (E1) d'un tube d'évacuation (3) maintenu de manière à pivoter où, pour évacuer le surnageant s'écoulant à travers le tube d'évacuation (3), il est prévu à proximité d'une seconde extrémité (E2) opposée au dispositif de soutirage (4) un tuyau flexible (14) qui est relié à un raccord (13) monté de manière fixe par rapport au palier pivotant (2) sur la surface d'appui,
**caractérisé en ce que**
le tube d'évacuation (3) est logé au niveau de sa seconde extrémité (E2) de manière à pivoter autour d'un axe de pivotement (A) dans un palier pivotant (2) présentant deux supports de palier (17) appuyés contre la surface d'appui.

2. Décanteur selon la revendication 1, où le dispositif de soutirage (4) comporte un tube de soutirage (5) disposé verticalement par rapport au tube d'évacuation (3) avec une fente d'aspiration en sens axial.

3. Décanteur selon l'une des revendications précédentes, où une première bride (11) est prévue à proximité de la première extrémité (E1) pour le montage amovible du dispositif de soutirage (4).

4. Décanteur selon la revendication 3, où une seconde bride (12) est prévue à proximité de la seconde extrémité (E2) du tube d'évacuation (3) pour le raccord amovible à une section d'extrémité (16) du tube d'évacuation (3) maintenue dans le palier pivotant (2).

5. Décanteur selon la revendication 4, où le tuyau flexible (14) est raccordé à un autre raccord (15) s'étendant essentiellement de manière radiale à partir de la section d'extrémité (16).

6. Décanteur selon la revendication 4 ou 5, où l'autre raccord (15) est monté avec son axe essentiellement verticalement par rapport à l'axe de pivotement (A) sur la section d'extrémité (16).

7. Décanteur selon l'une des revendications précédentes, où un tourillon (19) s'étendant dans un tube (18) logé entre les supports de palier (17) est prévu de manière amovible sur chacun des supports de palier (17).

8. Décanteur selon la revendication 7, où le tourillon (19) est logé dans un palier lisse (20) maintenu dans le tube (18).

9. Décanteur selon l'une des revendications précédentes, où un dispositif de pivotement destiné au pivotement du tube d'évacuation (3) autour de l'axe de pivotement (A) est prévu.

10. Décanteur selon la revendication 9, où le dispositif de pivotement comporte un treuil à câble électrique (8) dont le câble (9) qui y est logé est guidé par le biais d'un galet de guidage (10) et fixé à proximité de la première extrémité (E1) du tube d'évacuation (3).

11. Décanteur selon la revendication 9 ou 10, où le dispositif de pivotement comporte une plateforme (6) appuyée contre la surface d'appui par l'intermédiaire d'au moins un support (7) ; le treuil à câble (8) étant logé sur ladite plateforme.

12. Décanteur selon la revendication 9, 10 ou 11, où le dispositif de pivotement est fixé sur la surface d'appui.

13. Décanteur selon l'une des revendications précédentes, où la surface d'appui est le fond et/ou la paroi du bassin de décantation (1).

14. Décanteur selon l'une des revendications précédentes, où la surface d'appui est un cadre réalisé en métal.

15. Décanteur selon la revendication 14, où le cadre est muni de flotteurs.
